(19) Europäisches Patentamt
European Patent Office
Office européen des brevets

(11) **EP 4 582 375 A1**

(12) **EUROPEAN PATENT APPLICATION**

(43) Date of publication:
**09.07.2025 Bulletin 2025/28**

(21) Application number: **25150091.4**

(22) Date of filing: **02.01.2025**

(51) International Patent Classification (IPC):
**C01B 32/16** $^{(2017.01)}$

(52) Cooperative Patent Classification (CPC):
**C01B 32/16;** C01P 2002/82; C01P 2004/54

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.01.2024 KR 20240000758**

(71) Applicant: SK Innovation Co., Ltd.
**Seoul 03188 (KR)**

(72) Inventors:
• **KIM, Young Kwang**
**34124 Daejeon (KR)**
• **KIM, Soo Bean**
**34124 Daejeon (KR)**
• **CHUNG, Hyun Suk**
**34124 Daejeon (KR)**
• **HAN, Yong Bin**
**34124 Daejeon (KR)**

(74) Representative: **Prüfer & Partner mbB**
**Patentanwälte · Rechtsanwälte**
**Sohnckestraße 12**
**81479 München (DE)**

(54) **CARBON NANOTUBE AND MANUFACTURING METHOD THEREOF**

(57)    A method for manufacturing carbon nanotubes according to embodiments of the present disclosure includes injecting a carbon source, a metal catalyst, a cocatalyst and a transport gas into a reactor, and heating the reactor to manufacture carbon nanotubes. A ratio of a molar flow rate of the carbon source to a molar flow rate of the metal catalyst is 350 to 1,300. Further, a carbon nanotube, such as a carbon nanotube obtained by such method, is described.

[FIG. 1]

EP 4 582 375 A1

**Description**

[BACKGROUND OF THE INVENTION]

1. Field of the Invention

The present disclosure relates to a carbon nanotube and a method for manufacturing the carbon nanotube. Further, the present disclosure relates to a carbon nanotube which is obtainable or obtained by such a method.

2. Description of the Related Art

Carbon nanotubes (CNTs) are materials used in many fields due to their excellent chemical stability and mechanical properties, as well as high thermal conductivity.

Depending on synthesis conditions, the carbon nanotubes are classified into: single-walled carbon nanotubes (SWCNT) having a structure made by rolling up one layer of graphite and connecting ends thereof; double-walled carbon nanotubes (DWCNT) having a shape in which two layers of the single-walled carbon nanotubes are arranged about a concentric axis; and multi-walled carbon nanotubes (MWCNT) composed of a plurality of single-walled carbon nanotubes in a multi-layer.

As a method for synthesizing the carbon nanotubes, there are method such as vapor deposition, electric discharge, laser ablation, high-pressure vapor deposition, and similar or other techniques. In order to manufacture carbon nanotubes with high efficiency, a method capable of synthesizing carbon nanotubes with high crystallinity while converting a carbon source at a high conversion ratio is required.

[SUMMARY OF THE INVENTION]

An object of the present disclosure is to provide a method for manufacturing carbon nanotubes capable of providing high-quality carbon nanotubes. For example, the method disclosed herein may be improved, e.g., regarding efficiency such as providing carbon nanotubes with high crystallinity and/or high conversion ratio.

Another object of the present disclosure is to provide a carbon nanotube which may be obtainable or obtained by such method. For example, the carbon nanotubes obtained or manufactured by said method exhibit improved properties, e.g., regarding crystallinity.

To achieve the above object, according to an aspect of the present disclosure, there is provided a method for manufacturing carbon nanotubes including: injecting a carbon source, a metal catalyst, a cocatalyst and a transport gas into a reactor; and heating the reactor to manufacture carbon nanotubes, wherein, a ratio of a molar flow rate of the carbon source to a molar flow rate of the metal catalyst is 350 to 1,300.

The molar flow rate as defined herein is the number of moles of a substance that pass through a given surface per unit of time. The molar flow rate can be calculated by any suitable method that is known to a skilled person.

Further, it is possible to calculate the ratio of the carbon source and the catalyst and cocatalyst which are added. The catalyst content is determined (e.g., 10 wt.%) and the sulfur ratio in the cocatalyst is adjusted according to the metal content in the catalyst (e.g., catalyst: cocatalyst = 1:1 in molar ratio). Once the catalyst and cocatalyst content are determined, the remainder is the carbon source, and the molar ratio of carbon in the carbon source is calculated to obtain the ratio.

In exemplary embodiments, the ratio of the molar flow rate of the carbon source to the molar flow rate of the metal catalyst may be 400 to 700.

In exemplary embodiments, a ratio of the molar flow rate of the carbon source to a molar flow rate of the cocatalyst may be 700 to 2,600.

In exemplary embodiments, a ratio of the molar flow rate of the carbon source to a molar flow rate of the cocatalyst may be 700 to 2000.

In exemplary embodiments, a ratio of the molar flow rate of the carbon source to a molar flow rate of the cocatalyst may be 700 to 1500.

In exemplary embodiments, a ratio of the molar flow rate of the metal catalyst to a molar flow rate of the cocatalyst may be 1 to 3.

In exemplary embodiments, a ratio of the molar flow rate of the metal catalyst to a molar flow rate of the cocatalyst may be about 2.

In exemplary embodiments, a ratio of the molar flow rate of the carbon source to a molar flow rate of the transport gas may be 0.002 to 0.01.

In exemplary embodiments, a ratio of the molar flow rate of the carbon source to a molar flow rate of the transport gas may be 0.00900 to 0.00950

In exemplary embodiments, a ratio of the molar flow rate of the metal catalyst to a molar flow rate of the transport gas may be $0.7 \times 10^{-5}$ to $2.7 \times 10^{-5}$.

In exemplary embodiments, a ratio of the molar flow rate of the metal catalyst to a molar flow rate of the transport gas may be $0.8 \times 10^{-5}$ to $2.7 \times 10^{-5}$.

In exemplary embodiments, a ratio of the molar flow rate of the metal catalyst to a molar flow rate of the transport gas may be $1.3 \times 10^{-5}$ to $2.5 \times 10^{-5}$.

In exemplary embodiments, a ratio of the molar flow rate of the metal catalyst to a molar flow rate of the transport gas may be $1.3 \times 10^{-5}$ to $2.1 \times 10^{-5}$.

In an exemplary embodiment, a ratio of a molar flow rate of the carbon source to a molar flow rate of the metal catalyst is 350 to 1300, preferably 400 to 700; and additionally, at least one of (i) to (iv) applies, more preferably at least two or three of (i) to (iv) apply, and most preferably (i), (ii), (iii), and (iv) apply:

(i) a ratio of the molar flow rate of the carbon source to a molar flow rate of the cocatalyst is 700 to 2,600; preferably 700 to 2,000; more preferably 700 to 1500;

(ii) a ratio of the molar flow rate of the carbon source to a molar flow rate of the transport gas is 0.002 to 0.010; preferably 0.00900 to 0.00950;

(iii) a ratio of the molar flow rate of the metal catalyst to a molar flow rate of the transport gas is $0.7 \times 10^{-5}$ to $2.7 \times 10^{-5}$; preferably $0.8 \times 10^{-5}$ to $2.7 \times 10^{-5}$; more preferably $1.3 \times 10^{-5}$ to $2.5 \times 10^{-5}$;

(iv) the molar flow rate of the metal catalyst to a molar flow rate of the cocatalyst is 1 to 3; preferably about 2.

The carbon source, the metal catalyst, the cocatalyst and the transport gas may be injected into a reactor respectively commonly or separately, wherein one, two, three or all these components may be injected respectively in admixture or separately.

In exemplary embodiments, the carbon source may include at least one selected from the group consisting of an alcohol having 1 to 10 carbon atoms, a carboxylic acid having 1 to 10 carbon atoms, a saturated aliphatic hydrocarbon having 1 to 10 carbon atoms, and an unsaturated aliphatic hydrocarbon having 1 to 10 carbon atoms.

In exemplary embodiments, the metal catalyst may include an organometallic compound whose metallic component includes at least one selected from the group consisting of iron, nickel and cobalt.

In exemplary embodiments, the cocatalyst may include at least one selected from the group consisting of thiophene, dimethyl disulfide, carbon disulfide, diphenyl sulfide and benzothiophene.

In exemplary embodiments, the transport gas may include an inert gas and hydrogen.

In exemplary embodiments, a volumetric flow rate of hydrogen based on a total volumetric flow rate of the transport gas may be 10 to 30% by volume.

The volumetric flow rate as defined herein is the volume of fluid that passes through a given cross sectional area per unit of time. In general, the volumetric flow rate may be calculated as follows:

[Volumetric flow rate = cross-sectional area of the pipe or channel through which the fluid (e.g., gas) is moving \times velocity of the fluid]

The "Gas Hourly Space Velocity" (GHSV) is a measure that describes the flow of gas through a reactor's catalyst volume per hour. It indicates the number of reactor volumes of gas that pass through the catalyst volume in one hour and can be calculated as follows: (feed gas + solvent rate/(reactor volume).

In exemplary embodiments, a conversion ratio of the carbon source may be 2.1 to 10%, and the conversion ratio may be a percentage value of the number of carbons included in the carbon nanotube to the total number of carbons of the carbon source. The converted carbon is calculated from the weight of the CNT obtained by taking the amount of carbon in the carbon source as 100 and considering the CNT purity.

According to another aspect of the present disclosure, there is provided a carbon nanotube having a Raman R value of 40 to 50, which is defined by Equation 1:

$$[\text{Equation 1}]$$

$$\text{Raman R} = I_G/I_D.$$

In Equation 1, $I_G$ is a peak intensity for an absorption region of 1,580 cm$^{-1}$ to 1,600 cm$^{-1}$ in a Raman spectrum obtained by Raman analysis for the carbon nanotube, and $I_D$ is a peak intensity for an absorption region of 1,330 cm$^{-1}$ to 1,380 cm$^{-1}$ in the Raman spectrum.

In exemplary embodiments, the carbon nanotube may include at least one selected from the group consisting of a single-walled carbon nanotube (SWCNT), a thin-walled carbon nanotube (TWCNT) and a multi-walled carbon nanotube (MWCNT).

In exemplary embodiments, the carbon nanotube has an average aspect ratio of 10,000 to 20,000, and the average aspect ratio may be defined as an average value of a ratio of a length to a diameter of the carbon nanotube. The length is the largest absolute value of lengths measurable in the longitudinal direction, and the diameter is the largest absolute value of diameters measurable in the transverse direction of the nanotube, respectively. The absolute values of length and diameter can be obtained through TEM ("Transmission Electron Microscope") and SEM ("Scanning Electron Microscope") analysis.

The average value of a ratio of a length to a diameter is obtained from 50 random pieces; the obtained respective single values of a ratio of length to a diameter of 50 random pieces are added up and then divided by 50, thereby obtaining the average value of a ratio of a length to a diameter.

According to another aspect of the present disclosure, there is provided a carbon nanotube prepared by the method for manufacturing carbon nanotubes.

Through the method for manufacturing carbon nanotubes according to the exemplary embodiments of the present disclosure, a ratio of converting (conversion ratio) a carbon source into carbon nanotubes may be high. Accordingly, the production efficiency of the carbon nanotubes may be increased. In order to define what contributes to enhancing the conversion rate it is required to carry out analysis related to catalytic activity. For example, if the carbon source is excessive compared to the catalyst, unnecessary carbon is generated along with the CNT conversion.

On the other hand, if the carbon source is insufficient compared to the catalyst, it is difficult to make a complete CNT structure.

The carbon nanotubes manufactured by the method for manufacturing carbon nanotubes according to the exemplary embodiments of the present disclosure may optionally include an amorphous phase, but if present the amorphous phase preferably is at a low content, whereas a graphite crystallinity may be high and improved over conventionally obtained or manufactured carbon nanotubes.

The carbon nanotubes manufactured by the method for manufacturing carbon nanotubes according to the exemplary embodiments of the present disclosure may have a high aspect ratio, thereby having a long chain shape, and a surface area of the carbon nanotubes is large, thereby it may be easy to cut them in a longitudinal direction. Accordingly, the carbon nanotubes may be used in various fields through a simple processing process.

[BRIEF DESCRIPTION OF THE DRAWINGS]

The above and other objects, features and other advantages of the present disclosure will be more clearly understood from the following detailed description taken in conjunction with the accompanying drawings, in which:

FIG. 1 is a schematic cross-sectional view of an exemplary apparatus for manufacturing carbon nanotubes; and
FIG. 2 is a graph illustrating carbon source conversion ratios and $I_G/I_D$ ratios of examples and comparative examples depending on a ratio of a molar flow rate of a carbon source to a molar flow rate of a metal catalyst.

[DETAILED DESCRIPTION OF THE INVENTION]

A method for manufacturing carbon nanotubes according to the present disclosure includes the step of manufacturing carbon nanotubes by adjusting a ratio of a molar flow rate of a metal catalyst and a molar flow rate of a carbon source. In addition, the carbon nanotubes manufactured by the method according to the present disclosure may have improved graphite crystallinity.

Hereinafter, the present disclosure will be described in detail with reference to the accompanying drawings. However, the embodiments are merely illustrative and the present disclosure is not limited to the specific embodiments described by way of example.

According to exemplary embodiments, carbon nanotubes may be manufactured by floating catalyst chemical vapor deposition (FC-CVD). The floating catalyst chemical vapor deposition method is a method capable of synthesizing carbon nanotubes by continuously supplying a catalyst and a carbon source as a raw material while spraying them. Accordingly, unlike batch-wise synthesis, it is possible to continuously produce the carbon nanotubes.

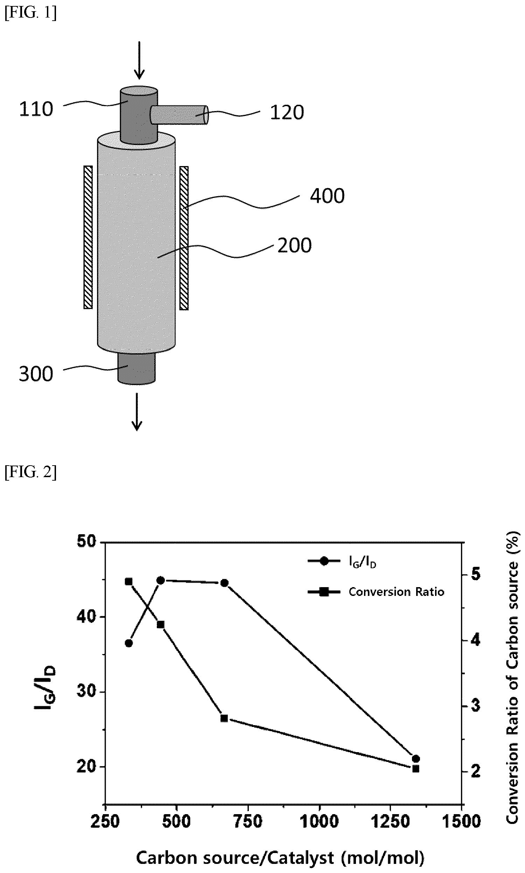

FIG. 1 is a schematic cross-sectional view of an exemplary apparatus for manufacturing carbon nanotubes. Referring to FIG. 1, a carbon source, a metal catalyst, a cocatalyst and a transport gas are injected into a reactor 200, and then the reactor is heated to manufacture carbon nanotubes.

The carbon source is a raw material for carbon nanotubes, and may be an organic material for supplying carbon by being decomposed or performing a catalytic reaction at a high temperature. In one embodiment, the carbon source is ethanol. The phase of the carbon source may be a liquid or gaseous phase, and carbon atoms derived from the carbon source may diffuse into catalyst particles, thereby allowing carbon nanotubes to grow from the surface of the catalyst particles.

For example, the carbon source may include an alcohol having 1 to 10 carbon atoms, a carboxylic acid having 1 to 10 carbon atoms, a saturated aliphatic hydrocarbon having 1 to 10 carbon atoms, and an unsaturated aliphatic hydrocarbon having 1 to 10 carbon atoms. These may be used alone or in combination of two or more thereof.

For example, the alcohol having 1 to 10 carbon atoms may include methanol, ethanol, propanol, butanol, ethylene glycol, polyethylene glycol, etc.

In an embodiment, ethanol is used as carbon source.

For example, the carboxylic acid having 1 to 10 carbon atoms may include acetic acid, formic acid, etc.

For example, the saturated aliphatic hydrocarbon having 1 to 10 carbon atoms may include methane, ethane, propane, butane, pentane, hexane, etc.

For example, the unsaturated aliphatic hydrocarbon having 1 to 10 carbon atoms may include ethylene, acetylene, methylacetylene, vinylacetylene, mesitylene, etc.

The metal catalyst may function as a catalyst by itself, or may be decomposed or perform a reaction at a high temperature to be changed into an active catalyst or form active catalyst particles. Accordingly, the active catalyst may promote the reaction of the carbon source to produce carbon nanotubes.

The metal catalyst may include a metal element such as iron, nickel, cobalt, platinum, ruthenium, molybdenum, vanadium, etc., and may include, for example, an oxide of the metal element. These may be used alone or in combination of two or more thereof.

In exemplary embodiments, the metal catalyst may include an organometallic compound including at least one selected from the group consisting of iron, nickel and cobalt.

For example, the metal catalyst may include an organometallic compound whose metallic component includes iron or iron species (including for example iron in an oxidation state), for example iron compounds or complexes with suitable ligands, such as acetylferrocene, ferrocenemethanol, diacetylferrocene, iron(II) acetylacetonate, ferrocene, etc., an organometallic compound whose metallic component includes cobalt or cobalt species (including for example cobalt in an oxidation state), for example cobalt compounds or complexes with suitable ligands, such as cobaltocene, an organometallic compound whose metallic component includes nickel or nickel species (including for example nickel in an oxidation state), for example nickel compounds or complexes with suitable ligands, such as nickellocene, etc. These may be used alone or in combination of two or more thereof.

In an embodiment, ferrocene is used as metal catalyst.

The cocatalyst may inhibit the catalyst particles, which are formed from the metal catalyst, from excessively growing, thereby increasing a total surface area of the catalyst particles. Accordingly, manufacturing efficiency of the carbon nanotubes may be increased. In addition, the cocatalyst may increase a speed at which carbon atoms diffuse to the surface of the catalyst particles, thereby increasing a production speed of the carbon nanotubes.

For example, the cocatalyst may include thiophene, dimethyl disulfide, carbon disulfide, diphenyl sulfide and benzothiophene, etc. These may be used alone or in combination of two or more thereof.

In an embodiment, thiophene is used as cocatalyst.

The transport gas (carrier gas) may be injected as a medium capable of floating the carbon source, the catalyst and the cocatalyst inside the reactor. The transport gas may include an inert gas and hydrogen. The inert gas is chemically stable and has little tendency to give, receive or share electrons, such that the reactant or product may be floated and moved without reacting with the carbon source or the manufactured carbon nanotubes.

The inert gas may include, for example, helium, nitrogen, neon, argon, krypton, xenon, etc. These may be used alone or in combination of two or more thereof.

In an embodiment, a combination of argon and hydrogen is used as transport gas.

Referring to FIG. 1 again, the carbon source, the metal catalyst and the cocatalyst may be input into the reactor 200 through an inlet port 110 in the form of a mixture. In addition, the transport gas may be injected into the reactor 200 through a gas injection port 120.

Unlike as shown in FIG. 1, the carbon source, the metal catalyst and the cocatalyst may also be input through a separate inlet port, or a mixture of the carbon source, the metal catalyst, the cocatalyst and the transport gas may be introduced through the inlet port 110, and a separate transport gas may not be introduced through the gas injection port 120.

Flow rates of the carbon source, the metal catalyst, the cocatalyst and the transport gas may vary depending on the size of the reactor and each type thereof.

For example, the carbon source may be input at a flow rate of 1 to 40 ml/h. Alternatively, the carbon source may be input at a flow rate of 0.0169 to 0.675 mol/h.

For example, the metal catalyst may be input at a flow rate of 9.44 to 378 mg/h. Alternatively, the metal catalyst may be input at a flow rate of $5.07 \times 10^{-5}$ to $2.03 \times 10^{-3}$ mol/h.

For example, the cocatalyst may be input at a flow rate of 2.13 to 85.4 mg/h. Alternatively, the cocatalyst may be input at a flow rate of $2.54 \times 10^{-5}$ to $1.01 \times 10^{-4}$ mol/h.

For example, the transport gas may be injected at a flow rate of 2 to 20 L/min. Alternatively, the transport gas may be input at a flow rate of 4.99 to 49.9 mol/h.

According to exemplary embodiments, a ratio of a molar flow rate of the carbon source to a molar flow rate of the metal catalyst is 350 to 1,300. The carbon source flux varies depending on all variables, including the type of carbon source, the amount of catalyst/cocatalyst, and reaction conditions. According to some embodiments, the ratio of the molar flow rate of the carbon source to the molar flow rate of the metal catalyst may be 400 to 700 or 440 to 680.

When inputting the metal catalyst and the carbon source into the reactor at the molar flow rate ratio within the above range, an amount of the metal catalyst is appropriate, such that it may not act as an impurity while promoting the reaction of the carbon source.

When the ratio of the molar flow rate of the carbon source to the molar flow rate of the metal catalyst is greater than 1,300, the amount of the carbon source may be too much compared to the metal catalyst, thereby causing a reduction in the production speed of the carbon nanotubes.

When the ratio of the molar flow rate of the carbon source to the molar flow rate of the metal catalyst is less than 350, the metal catalyst may rather act as an impurity thereby inhibiting the production of carbon nanotubes, and the conversion ratio of the carbon source to the carbon nanotubes may be decreased.

It is possible to control the residence time e.g. of the carbon source and of the metal catalyst by controlling the flow rate. The catalytic activity can be increased by maintaining it appropriately at the required reaction temperature.

For example, if the residence time is too short, the catalyst generation and reaction time are not sufficient, so high-quality CNTs cannot be obtained.

If the residence time is too long, catalyst agglomeration occurs, and a large amount of low-crystallinity carbon other than CNTs can be generated. In exemplary embodiments, a ratio of the molar flow rate of the carbon source to a molar flow rate of the cocatalyst may be 700 to 2,600. According to some embodiments, the ratio of the molar flow rate of the carbon source to the molar flow rate of the cocatalyst may be 800 to 1,400. Within the above range, the amount of the cocatalyst is appropriate, such that it may not act as an impurity while increasing the activity of the catalyst.

In exemplary embodiments, the ratio of the molar flow rate of the metal catalyst to the molar flow rate of the cocatalyst may be 1 to 3. In some embodiments, the ratio of the molar flow rate of the metal catalyst to the molar flow rate of the cocatalyst may be 1.5 to 2.5.

Within the above range, the cocatalyst may not act as an impurity or cause a side reaction in the reaction of the carbon source while increasing the effect of promoting the action of the metal catalyst by the cocatalyst.

In exemplary embodiments, a ratio of the molar flow rate of the carbon source to a molar flow rate of the transport gas may be 0.002 to 0.01. In some embodiments, the ratio of the molar flow rate of the carbon source to the molar flow rate of the transport gas may be 0.009 to 0.01.

In exemplary embodiments, a ratio of the molar flow rate of the metal catalyst to the molar flow rate of the transport gas may be $0.7 \times 10^{-5}$ to $2.7 \times 10^{-5}$. In some embodiments, the ratio of the molar flow rate of the metal catalyst to the molar flow rate of the transport gas may be $1.3 \times 10^{-5}$ to $2.1 \times 10^{-5}$. Within the above range, the carbon source and the metal catalyst may be more uniformly dispersed and flowed in a mixed state inside the reactor, and the efficiency of the carbon nanotube formation reaction may be improved. Accordingly, the productivity of the carbon nanotube may be improved.

In exemplary embodiments, a volumetric flow rate of hydrogen based on a total volumetric flow rate of the transport gas may be 10% by volume to 30% by volume. Within the above range, hydrogen which can act as a reducing gas may promote the formation reaction of the carbon nanotubes.

The reactor may be heated in a state where the carbon source, the metal catalyst, the cocatalyst and the transport gas are injected into the reactor. Accordingly, the carbon source and the metal catalyst may be decomposed to form carbon atoms and catalyst particles, and carbon nanotubes may grow on the surface of the catalyst particles to produce carbon nanotubes.

In exemplary embodiments, the reactor may be heated to a temperature of 1,000 °C to 2,000 °C. In some embodiments, the reactor may be heated to a temperature of 1,000 °C to 1,700 °C, 1,000 °C to 1500 °C or 1,000 °C to 1,300 °C.

The produced carbon nanotubes may be discharged through an outlet port 300 to be obtained. For example, the carbon nanotubes may be wound at a lower end of the outlet port 300 to be obtained in the form of carbon nanotube fibers.

Accordingly, the decomposition of the carbon source and the catalyst and the growth of the carbon nanotubes may be smoothly performed.

In exemplary embodiments, the conversion ratio of the carbon source may be 2.1% to 10%. In some embodiments, the conversion ratio of the carbon source may be 2.8% to 5% or 2.8% to 4.8%. Within the above range, the ratio at which the carbon source is converted into carbon nanotubes is high, thereby increasing the production efficiency of the carbon nanotubes.

The conversion ratio may be defined as a percentage value of the number of carbons included in the carbon nanotubes to the total number of carbons in the carbon source.

According to the present disclosure, there is provided a carbon nanotube having a Raman R value of 40 to 50

which is defined by Equation 1 below.

[Equation 1]

$$\text{Raman R} = I_G/I_D$$

In Equation 1, $I_G$ is a peak intensity for an absorption region of 1,580 cm$^{-1}$ to 1,600 cm$^{-1}$ in a Raman spectrum obtained by Raman analysis for the carbon nanotube, and $I_D$ is a peak intensity for an absorption region of 1,330 cm$^{-1}$ to 1,380 cm$^{-1}$ in the Raman spectrum.

In some embodiments, the Raman R value of the carbon nanotube may be 43 to 47.

When satisfying the $I_G/I_D$ value within the above range, graphite crystallinity of the carbon nanotube may be high, and a content of the amorphous phase acting as a defect may be low. Accordingly, a high-quality carbon nanotube may be implemented.

In exemplary embodiments, the carbon nanotube may include at least one selected from the group consisting of a single-walled carbon nanotube (SWCNT), a thin-walled carbon nanotube (TWCNT) and a multi-walled carbon nanotube (MWCNT).

In exemplary embodiments, the carbon nanotube may have an average aspect ratio of 10,000 to 20,000. The average aspect ratio may be defined as an average value of a ratio of a length to a diameter of the carbon nanotube.

Within the above range, the individual carbon nanotube may be suitable for use as a carbon nanofiber, and may be suitable for use as a conductive material for an electrode due to a large surface area thereof.

Hereinafter, experimental examples including specific examples and comparative examples are proposed to facilitate understanding of the present disclosure. However, the following examples are only given for illustrating the present disclosure and are not intended to limit the appended claims. It will be apparent those skilled in the art that various alterations and modifications are possible within the scope of the present disclosure.

### Examples 1 and 2 and Comparative Examples 1 and 3

Carbon nanotubes of the examples and comparative examples were manufactured using the apparatus for manufacturing carbon nanotubes schematically shown in FIG. 1. Specifically, the metal catalyst, the cocatalyst, the carbon source and the transport gas were injected into the reactor 200 through the inlet port 110 as a mixture (feed) of the metal catalyst, the cocatalyst, the carbon source and the transport gas by using the molar flow rate ratios or the volumetric flow rates as described in Table 1 below. The temperature at the point where the raw material inlet port 110 of the reactor 200 was set to 100 to 400 °C, and the temperature inside the reactor 200 was increased to 1000 to 1,500 °C using a heating furnace 400. The carbon nanotubes manufactured inside the reactor 200 were obtained from the outlet port 300. Ferrocene was used as the metal catalyst, thiophene was used as the cocatalyst, ethanol was used as the carbon source, and a mixed gas of argon and hydrogen was used as the transport gas. Table 2 illustrates the contents of the carbon source, the cocatalyst, and the metal catalyst based on a mass flow rate of the mixture (feed).

[TABLE 1]

| | Feed volume Flow rate (ml/hr) | Carbon Source/ Transport Gas (mol/mol) | Carbon source/ Metal catalyst (mol/mol) | Metal catalyst/ Transport gas ($\times 10^{-5}$ mol/mol) | Carbon source/ Cocatalyst (mol/mol) | Hydrogen/ Transport Gas (vol%) | Metal catalyst/coc atalyst (mol/mol) |
|---|---|---|---|---|---|---|---|
| Comparative Example 1 | 10.00 | 0.00932 | 1341 | 0.695 | 2684 | 16.9 | 2 |
| Example 1 | 10.00 | 0.00932 | 671 | 1.390 | 1338 | 16.9 | 2 |
| Example 2 | 10.00 | 0.00932 | 448 | 2.080 | 889 | 16.9 | 2 |
| Comparative Example 2 | 10.00 | 0.00932 | 337 | 2.770 | 665 | 16.9 | 2 |
| Comparative Example 3 | 10.00 | 0.00626 | 337 | 1.860 | 665 | 16.9 | 2 |

[TABLE 2]

|  | Carbon source/feed (wt. %) | Metal catalyst/feed (wt. %) | Cocatalyst/feed (wt. %) |
|---|---|---|---|
| Comparative Example 1 | 99.63 | 0.30 | 0.07 |
| Example 1 | 99.26 | 0.60 | 0.14 |
| Example 2 | 98.90 | 0.90 | 0.20 |
| Comparative Example 2 | 98.53 | 1.2 | 0.27 |
| Comparative Example 3 | 98.53 | 1.2 | 0.27 |

**Experimental Example 1: Calculation of conversion ratio of the carbon source**

The carbon source conversion ratios of each example and comparative example were calculated by calculating a percentage of the number of carbons included in the obtained carbon nanotubes to the total number of carbons of the input carbon source. The carbon source conversion ratios of each example and comparative example are shown in Table 3 below.

**Experimental Example 2: Raman analysis of carbon nanotubes**

Raman analysis was performed on the carbon nanotubes of the examples and comparative examples under the following conditions to obtain Raman spectra. From the Raman spectra, a peak intensity ratio (IG/ID) of the absorption region corresponding to a G band at about 1,580 $cm^{-1}$ to 1,600 $cm^{-1}$ and a peak intensity ratio of the absorption region corresponding to a D band at about 1,330 $cm^{-1}$ to 1,380 $cm^{-1}$ were calculated.

    i) Raman spectrometer: in Via Raman Microscope, Renishaw (UK)
    ii) Argon ion laser wavelength: 532 nm
    iii) Exposure time: 10 seconds, the number of times of mapping: 10 times
    iv) Detector: 1024 StreamLine CCD, Renishaw (UK)
    v) Laser power: 1%
    vi) Magnification: 20x

FIG. 2 illustrates the carbon source conversion ratios and $I_G/I_D$ ratios of the examples and comparative examples calculated according to Experimental Examples 1 and 2 as a graph depending on the ratio of the molar flow rate of the carbon source to the molar flow rate of the metal catalyst. In addition, specific values are also shown in Table 3 below.

[TABLE 3]

|  | Carbon source conversion ratio (%) | IG/ID |
|---|---|---|
| Comparative Example 1 | 2.04 | 21.0 |
| Example 1 | 2.81 | 44.5 |
| Example 2 | 4.23 | 44.8 |
| Comparative Example 2 | 4.89 | 36.0 |
| Comparative Example 3 | 3.86 | 27.9 |

Referring to FIG. 2 and Table 3, the carbon source was converted into the carbon nanotubes at a high conversion ratio through the methods of the examples, and the manufactured carbon nanotubes had a high $I_G/I_D$ ratio, which resulted in high graphite crystallinity of the carbon nanotubes.

However, the IG/ID ratio of the carbon nanotubes manufactured in the comparative examples, in which the molar flow rate ratio of the carbon source to the molar flow rate of the metal catalyst was less than 350 or greater than 1,300, was lower than the $I_G/I_D$ ratio of the carbon nanotubes of the examples. Accordingly, the carbon nanotubes of the comparative examples included more defects such as amorphous carbon than the examples.

The contents described above are merely an example of applying the principle of the present disclosure, and other configurations may be further included.

**Claims**

1. A method for manufacturing carbon nanotubes comprising:

   injecting a carbon source, a metal catalyst, a cocatalyst and a transport gas into a reactor; and
   heating the reactor to manufacture carbon nanotubes,
   wherein a ratio of a molar flow rate of the carbon source to a molar flow rate of the metal catalyst is 350 to 1,300.

2. The method for manufacturing carbon nanotubes according to claim 1, wherein the ratio of the molar flow rate of the carbon source to the molar flow rate of the metal catalyst is 400 to 700.

3. The method for manufacturing carbon nanotubes according to claim 1 or claim 2, wherein a ratio of the molar flow rate of the carbon source to a molar flow rate of the cocatalyst is 700 to 2,600.

4. The method for manufacturing carbon nanotubes according to one of claims 1 to 3, wherein a ratio of the molar flow rate of the metal catalyst to a molar flow rate of the cocatalyst is 1 to 3.

5. The method for manufacturing carbon nanotubes according to one of claims 1 to 4, wherein a ratio of the molar flow rate of the carbon source to a molar flow rate of the transport gas is 0.002 to 0.01.

6. The method for manufacturing carbon nanotubes according to one of claims 1 to 5, wherein a ratio of the molar flow rate of the metal catalyst to a molar flow rate of the transport gas is $0.7 \times 10^{-5}$ to $2.7 \times 10^{-5}$.

7. The method for manufacturing carbon nanotubes according to one of claims 1 to 6, wherein the carbon source comprises at least one selected from the group consisting of an alcohol having 1 to 10 carbon atoms, a carboxylic acid having 1 to 10 carbon atoms, a saturated aliphatic hydrocarbon having 1 to 10 carbon atoms, and an unsaturated aliphatic hydrocarbon having 1 to 10 carbon atoms.

8. The method for manufacturing carbon nanotubes according to one of claims 1 to 7, wherein the metal catalyst comprises an organometallic compound whose metallic component includes at least one selected from the group consisting of iron, nickel and cobalt.

9. The method for manufacturing carbon nanotubes according to one of claims 1 to 8, wherein the cocatalyst comprises at least one selected from the group consisting of thiophene, dimethyl disulfide, carbon disulfide, diphenyl sulfide and benzothiophene.

10. The method for manufacturing carbon nanotubes according to one of claims 1 to 9, wherein the transport gas comprises an inert gas and hydrogen.

11. The method for manufacturing carbon nanotubes according to claim 10, wherein a volumetric flow rate of hydrogen based on a total volumetric flow rate of the transport gas is 10 to 30% by volume.

12. The method for manufacturing carbon nanotubes according to one of claims 1 to 11, wherein a conversion ratio of the carbon source is 2.1 to 10%, and
    the conversion ratio is a percentage value of the number of carbons included in the carbon nanotube to the total number of carbons of the carbon source.

13. A carbon nanotube having a Raman R value of 40 to 50, which is defined by Equation 1:

[Equation 1]

$$\text{Raman R} = I_G/I_D$$

(in Equation 1, $I_G$ is a peak intensity for an absorption region of 1,580 cm$^{-1}$ to 1,600 cm$^{-1}$ in a Raman spectrum obtained by Raman analysis for the carbon nanotube, and $I_D$ is a peak intensity for an absorption region of 1,330 cm$^{-1}$ to 1,380 cm$^{-1}$ in the Raman spectrum).

14. The carbon nanotube according to claim 13, comprising at least one selected from the group consisting of a single-walled carbon nanotube (SWCNT), a thin-walled carbon nanotube (TWCNT) and a multi-walled carbon nanotube (MWCNT);
and/or
wherein the carbon nanotube has an average aspect ratio of 10,000 to 20,000, and
the average aspect ratio is defined as an average value of a ratio of a length to a diameter of the carbon nanotube.

15. A carbon nanotube, obtained by a method as defined in any one of claims 1 to 12.

[FIG. 1]

[FIG. 2]

Europäisches
Patentamt

European
Patent Office

Office européen
des brevets

# EUROPEAN SEARCH REPORT

**Application Number**

EP 25 15 0091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 611 268 A (UNIV TSINGHUA) 17 January 2023 (2023-01-17) * example 3 * | 1-15 | INV. C01B32/16 |
| X | JP 5 046078 B2 (NAT INST OF ADV IND & TECHNOL; NIKKISO CO LTD) 10 October 2012 (2012-10-10) * example 1 * | 1,2,7-9, 12-15 | |
| X | CN 114 477 141 A (JIANGSU TANEL SCIENCE AND TECH CO LTD) 13 May 2022 (2022-05-13) * examples 6, 7; table 4 * | 13-15 | |
| X | US 2021/188643 A1 (KIM SEUNG MIN [KR] ET AL) 24 June 2021 (2021-06-24) * claim 17 * | 13-15 | |

**TECHNICAL FIELDS SEARCHED (IPC)**

C01B

The present search report has been drawn up for all claims

| Place of search | Date of completion of the search | Examiner |
|---|---|---|
| The Hague | 9 May 2025 | Sevillano Rodriguez |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 25 15 0091

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2025

| Patent document cited in search report | | Publication date | Patent family member(s) | | Publication date |
|---|---|---|---|---|---|
| CN 115611268 | A | 17-01-2023 | NONE | | |
| JP 5046078 | B2 | 10-10-2012 | JP | 5046078 B2 | 10-10-2012 |
| | | | JP | 2007246316 A | 27-09-2007 |
| CN 114477141 | A | 13-05-2022 | NONE | | |
| US 2021188643 | A1 | 24-06-2021 | EP | 3838842 A1 | 23-06-2021 |
| | | | KR | 20210078701 A | 29-06-2021 |
| | | | US | 2021188643 A1 | 24-06-2021 |

For more details about this annex : see Official Journal of the European Patent Office, No. 12/82